(19)

Europäisches
Patentamt

European
Patent Office

Office européen
des brevets

(11) **EP 3 951 634 A1**

(12) **EUROPEAN PATENT APPLICATION**

published in accordance with Art. 153(4) EPC

(43) Date of publication:
**09.02.2022 Bulletin 2022/06**

(21) Application number: **21755885.7**

(22) Date of filing: **08.06.2021**

(51) Int Cl.:
*G06F 30/20* ^(2020.01)

(86) International application number:
**PCT/CN2021/098806**

(87) International publication number:
**WO 2021/249374 (16.12.2021 Gazette 2021/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.06.2020 CN 202010519286**

(71) Applicant: **China Institute of Atomic Energy
Beijing 102413 (CN)**

(72) Inventors:
• **YANG, Rui
  Beijing 102413 (CN)**
• **HU, Yun
  Beijing 102413 (CN)**

• **SHAN, Haodong
  Beijing 102413 (CN)**
• **WANG, An
  Beijing 102413 (CN)**
• **YANG, Wen
  Beijing 102413 (CN)**
• **XU, Li
  Beijing 102413 (CN)**
• **HU, Changjun
  Beijing 102413 (CN)**
• **LI, Long
  Beijing 102413 (CN)**

(74) Representative: **Stiel, Jürgen
  Patentanwalt Stiel
  Geissleite 32
  97289 Thüngen (DE)**

(54) **FEATURE LINE TRACING METHOD, AND CORE NEUTRON PHYSICS CALCULATION METHOD AND DEVICE**

(57) There is provided a method of tracking a characteristic line, a method and apparatus of calculating core neutron physics, and a computer-readable storage medium. The method of tracking the characteristic line includes: determining, sequentially from the uppermost level to the lowest level, whether an intersection of the sub-model meeting a first preset condition in each of the plurality of levels and the characteristic line segment meets a second preset condition or not; and obtaining an intersection, that meets the second preset condition, of the sub-model meeting the first preset condition in the lowest level and the characteristic line, so as to obtain a segment correspondence between the characteristic line and the material of the core according to the intersection obtained. The method of tracking the characteristic line may be implemented to reduce an amount of calculation and improve a calculation efficiency.

FIG. 2

**Description**

TECHNICAL FIELD

The present disclosure relates to a field of a reactor technology, and in particular to design, for a core model, a method of tracking a characteristic line, a method and apparatus of calculating core neutron physics, and a computer-readable storage medium.

BACKGROUND

In most codes based on methods of characteristics in a related art, a segment-by-segment search method is used to track a characteristic line. Key steps of such a tracking method include: 1. positioning a point; 2. solving a distance from the point to a spatial range boundary in a fixed direction. Both steps require a lot of time for calculation, especially a calculation for positioning the point.

When positioning a point, one method needs to search geometries in a lower level of a core model and make determinations in turn. If the point is found in a geometry, it is needed to further make determinations in turn in the lower geometries of the geometry until the point is positioned in a reflective level basic element in a lowest level. When positioning a next point, the above steps need to be repeated, that is, a large number of repetitive calculations need to be carried out in this method, which has a large amount of calculation and a low efficiency.

In order to improve the method, a neighbor search method is used in the Monte Carlo code. After one point is determined, a determination on the next point does not start from a top-level geometry, but from a previous point. In this method, if the next point is not found in a plurality of geometries corresponding to the position of the previous point, the process needs to return to the geometry in an upper level for determination, which still needs a plurality of repetitive calculations and the efficiency is low. In addition, due to an intersection operation in a modeling process of the Monte Carlo method, a spatial range of a lower-level geometry may not be a real spatial range. Therefore, the geometry needs to be pre-processed prior to searching from the lower-level geometry.

SUMMARY

In view of the above problems, the present disclosure is proposed to provide a method of tracking a characteristic line, a method and apparatus of calculating core neutron physics, a core model, an apparatus of simulating a reactor, and a computer-readable storage medium, which overcomes the above problems or at least partially solves the above problems.

According to a first aspect of the present disclosure, there is provided a method of tracking a characteristic line in a core model, wherein the core model is configured to divide a spatial range of a core into a plurality of levels, and each of the plurality of levels includes a plurality of sub-models, wherein at least one of the plurality of sub-models in one level of the plurality of levels belongs to one of the plurality of sub-models in an upper level, each of the plurality of sub-models in a lowest level includes only one material of the core; a union operation on all the sub-modules in each upper level and an intersection operation with a spatial range of the upper level are performed for all the sub-modules in each upper level so as to form the sub-model in the upper level, and an uppermost level is the core model; the method includes: determining, sequentially from the uppermost level to the lowest level, whether an intersection of the sub-model meeting a first preset condition in each of the plurality of levels and the characteristic line segment meets a second preset condition or not; and obtaining an intersection, that meets the second preset condition, of the sub-model meeting the first preset condition in the lowest level and the characteristic line, so as to obtain a segment correspondence between the characteristic line and the material of the core according to the intersection obtained.

According to a second aspect of the present disclosure, there is provided a method of calculating core neutron physics, including: a modeling step, including: constructing a core model, wherein the core model is constructed to divide a spatial range of a core into a plurality of levels, and each of the plurality of levels includes a plurality of sub-models, wherein at least one of the sub-models in one level of the plurality of levels belongs to one of the sub-models in an upper level, each of the plurality of sub-models in a lowest level includes only one material of the core; a union operation on all the sub-modules in each upper level and an intersection operation with a spatial range of the upper level are performed for all the sub-modules in each upper level so as to form the sub-model in the upper level, and an uppermost level is the core model; a tracking step, including: defining a characteristic line and tracking the characteristic line according to the method of tracking the characteristic line described above; and an iterative calculation step, including: performing an iterative calculation based on a result of tracking the characteristic line so as to obtain a solution of a neutron transport equation of the core.

According to a third aspect of the present disclosure, there is provided a reactor model constructed by using the method of calculating the core neutron physics described in the second aspect of the present disclosure.

According to a fourth aspect of the present disclosure, there is provided an apparatus of calculating core neutron physics, including: a modeling module configured to construct a core model, wherein the core model is constructed to divide a spatial range of a core into a plurality of levels, and each of the plurality of levels includes a plurality of sub-models, wherein at least one of the sub-models in one level of the plurality of levels belongs to one of the sub-models in an upper level, each of the plurality of sub-models in a lowest level includes only one material of the core; a union operation on all the sub-modules in each upper level and an intersection operation with a spatial range of the upper level are performed for all the sub-modules in each upper level so as to form the sub-model in the upper level, and an uppermost level is the core model; a characteristic line tracking module configured to define a characteristic line and tracking the characteristic line according to the method of tracking the characteristic line described above; and an iterative calculation module configured to perform an iterative calculation based on a result of tracking the characteristic line so as to obtain a solution of a neutron transport equation of the core.

According to a fifth aspect of the present disclosure, there is provided an apparatus of simulating a reactor, including: the apparatus of calculating the core neutron physics described in the fourth aspect of the present disclosure.

According to a sixth aspect of the present disclosure, there is provided a computer-readable storage medium having instructions stored thereon, wherein the instructions are executable to implement the method of calculating the core neutron physics described above.

The method of tracking the characteristic line according to the embodiments of the present disclosure is simple, so that the amount of calculation may be reduced and the calculation efficiency may be improved. In addition, the method of tracking by level also avoids performing geometric preprocessing on the core model.

BRIEF DESCRIPTION OF THE DRAWINGS

FIG. 1 shows a schematic diagram of a core model according to some embodiments of the present disclosure.

FIG. 2 shows a schematic diagram of a tracking method according to some embodiments of the present disclosure.

FIG. 3 shows a schematic diagram of a basic unit calculation tree according to some embodiments of the present disclosure.

FIG. 4 shows an auxiliary function image according to some embodiments of the present disclosure.

FIG. 5 shows a schematic diagram of a sub-solution set intersection or union operation method according to some embodiments of the present disclosure.

FIG. 6 shows a schematic diagram of a Takeda problem in a related art.

FIG. 7 shows a schematic diagram of a C5G7 problem in a related art.

DETAILED DESCRIPTION OF EMBODIMENTS

The embodiments of the present disclosure will be described in detail below with reference to the drawings. In the following detailed description, for ease of explanation, many specific details are set forth to provide a comprehensive understanding of the embodiments of the present disclosure. However, one or more embodiments may also be implemented without these specific details.

The embodiment firstly provides a method of tracking a characteristic line in a core model. The core model is used to divide a spatial range of a core into a plurality of levels each including a plurality of sub-models. That is, the core model includes a plurality of levels, and each level includes a plurality of sub-models.

In the plurality of levels, at least one sub-model of one level belongs to a sub-model of an upper level. That is, in the one level, a union operation is performed on one sub-model or a plurality of sub-models, and an intersection operation with a spatial range of an upper level is performed, and then a sub-model of the upper level may be obtained. Each sub-model in a lowest level includes only one material of the core. It may be understood that through the above calculations, as the level continuously rises, more and more core materials may be included in each sub-model. Therefore, after the calculation is performed on all the sub-models in an uppermost level, a result may correspond to the spatial range of the core and include all the materials of the core.

A method of constructing the core model is explained in detail below.

In reactor physics, modeling is mainly to describe material information of each position in a three-dimensional space. The spatial range may be expressed as $U \subset R^3$, the material may be written as a set *materials*={1,2,...,M} in the form of labels. Then a sub-model in the core model may be expressed as a mapping relationship between a spatial point set $U$ and a material set *materials,* denoted by $G=(U,f: U \rightarrow materials)$.

Since the sub-model $U$ in the lowest level includes only one material, that is, there is only one object $m$ in *materials,* the sub-model may be written as $(U,f: U \rightarrow \{m\})$, that is,

$$f(\mathbf{r}) = m, \mathbf{r} \in U$$

The sub-model may also be called a basic element, abbreviated as $(U,m)$, which is a simplest model unit.

In order to use the sub-models to construct a more complex core model, a logical operation needs to be performed on the sub-models.

If a plurality of sub-models $G_1=(U_1,f_1)$, $G_2=(U_2,f_2)$ ... $G_n=(U_n,f_n)$ meet

$$\forall i \neq j, U_i \cap U_j = \varnothing$$

that is, if the spatial ranges represented thereby are mutually exclusive, then a combination of $f_1, f_2, ..., f_n$ may form a new mapping $f$

$$f : \bigcup_{i=1}^{n} U_i \rightarrow materials = \begin{cases} f_1(\mathbf{r}), \mathbf{r} \in U_1 \\ f_2(\mathbf{r}), \mathbf{r} \in U_2 \\ ... \\ f_n(\mathbf{r}), \mathbf{r} \in U_n \end{cases}$$

Therefore, $\left( \bigcup_{i=1}^{n} U_i, f \right)$ forms a new geometry, that is, a sub-model of the upper level, denoted as:

$$\left( \bigcup_{i=1}^{n} U_i, f \right) = G_1 \cup G_2 \cup ... \cup G_n = \bigcup_{i=1}^{n} G_i$$

The operation is called a union operation, and $\bigcup_{i=1}^{n} G_i$ is called a union of $G_1, G_2, ..., G_n$. The union operation is equivalent to assembling a plurality of sub-models of the lower level together.

The union operation possesses commutative law and associative law.

Assuming that there is a geometry $G=(U,f)$ and a spatial range $U'$, a mapping $f':U' \cap U \rightarrow materials$ may be constructed:

$$f'(\mathbf{r}) = f(\mathbf{r}), \mathbf{r} \in U' \cap U$$

then $(U \cap U', f)$ may form a geometry, denoted as:

$$U' \cap G = (U' \cap U, f')$$

The operation is called an intersection operation, and $U' \cap G$ is called an intersection of the spatial range $U'$ and the geometry G. An essence of the intersection operation is to use a spatial range to divide graphics, but actually the spatial range of $U' \cap U$ takes effect. In particular, if the spatial range $U' \subset U$, then:

$$U' \cap G = (U', f'), U' \subset U$$

The specific steps for constructing the core model using the above method will be given below.

Same as the Monte Carlo code, two data structures including Cell and Universe are used for specific implementation. The Cell represents a geometry and requires a user to give a spatial range $U$ and a material index $m$. That is, the user is required to set a lowest level sub-model that includes only one material:

$$\text{Cell}_{base} = (U, m)$$

The Universe requires the user to give a list of a plurality of geometries {Cell$_{down,i}$} and represents the union of these models, that is, represents the union operation performed on the plurality of sub-models:

$$\text{Universe} = \bigcup_{i=1}^{N} \text{Cell}_{down,i}$$

Another format of the Cell requires the user to give a Universe and a spatial range $U$ to indicate the intersection of $U$ and the Universe:

$$\text{Cell}_{up} = U \cap \text{Universe}$$

In other words, there is necessarily a spatial range $U$ in the Cell, and the other may be filled with a material index to form the basic element Cell, or may be filled with a Universe to form a combination Cell, that is, the sub-model of the upper level may represent a larger spatial range and include more materials.

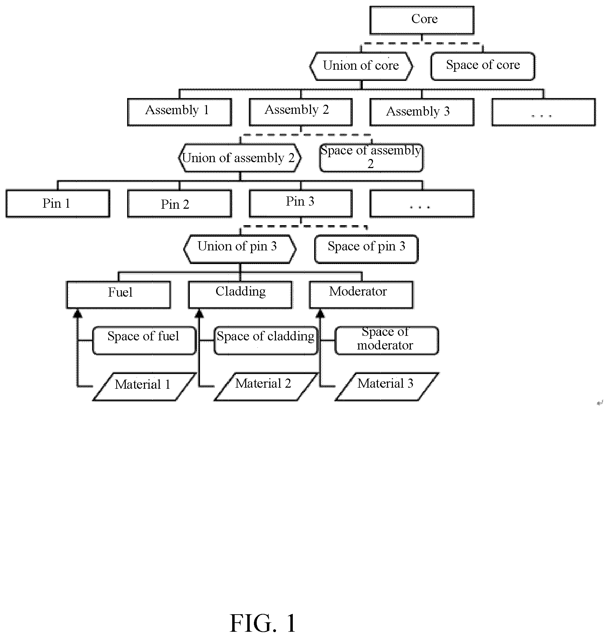

FIG. 1 shows a simple schematic diagram of the core model. In FIG. 1, a parallelogram box represents the material, a rounded corner box represents the spatial range $U$, a rectangular box represents the sub-model, and a hexagon box represents the Universe; a solid line represents the union, and a dashed line represents the intersection. Each of the lowest-level sub-models, that is, fuel, cladding and moderator, includes only one material. These lowest-level sub-models may generate a union pin 3, which intersects with the spatial range of the pin 3 to form a sub-model pin 3 of the upper level, that is, to form a sub-model of the pin level. By union operation and intersection operation, a plurality of sub-models of the pin level may form an assembly 2, which is a sub-model in an assembly level, that is, the uppermost-level sub-model in the model. The uppermost sub-models finally form the entire core model. It may be understood that in the actual modeling process, the core includes a plurality of different structures, and each of the structures may be represented by a different number of levels. However, the lowest-level sub-model only includes one core material, and all the uppermost-level sub-models after the operations form the spatial range of the core and include all the materials of the core.

In the method of tracking the characteristic line, it needs to find a length of each line segment generated by cutting the characteristic line by the entire geometry and a Cell index corresponding to the each line segment. The method of tracking the characteristic line according to the present disclosure may include: determining, sequentially from the uppermost level to the lowest level, whether an intersection of the sub-model meeting a first preset condition in each level with the characteristic line meets a second preset condition or not; and obtaining an intersection, that meets the second preset condition, of the sub-model meeting the first preset condition in the lowest level and the characteristic line, so as to obtain a segment correspondence between the characteristic line and the material of the core according to the intersection obtained.

The method of tracking the characteristic line according to the present disclosure is implemented to use a linear nature of the characteristic line, so that a traversal of the core model is performed only to the lower level. And, in the entire tracking of the characteristic line, a step of returning to an upper-level node for traversal in a segment-by-segment tracking algorithm in the related art is avoided, so that the number of calculations is saved and the efficiency is improved. Furthermore, the segment-by-segment tracking algorithm in the related art needs to store segment information when performing real-time tracking, but the method of tracking the characteristic line according to the present disclosure only needs to double the calculation time even when performing real-time tracking, so that the storage of segment information is avoided, and a lot of storage space is saved.

Further, the first preset condition for the uppermost level is that the sub-model is located in the uppermost level; and the first preset condition for a non-uppermost level is that the sub-model in the non-uppermost level corresponds to the sub-model whose intersection with the characteristic line segment meets the second preset condition in the upper level of the non-uppermost level. Those skilled in the art may understand that when the uppermost level is determined, all the sub-models of the uppermost level are determined; while when the non-uppermost level is determined, a part of the sub-models in the non-uppermost level is determined. The part of the sub-models corresponds to a part of the spatial range of the upper level of the non-uppermost level, and the part of spatial range refers to the sub-models of the upper level, whose intersection with the characteristic line meets the second preset condition, of the non-uppermost level.

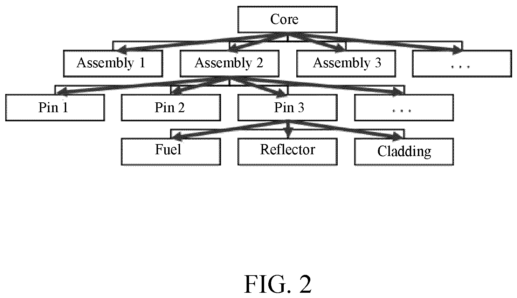

That is, when tracking the characteristic line, as shown in FIG. 2, it is firstly determined whether the intersection of a plurality of sub-models in the uppermost level with the characteristic line meets the second preset condition or not. For the sub-models corresponding to the intersection that meets the second preset condition, it is further determined whether the intersection of the corresponding sub-models of the lower level with the characteristic line meets the second preset condition or not. It may be understood that the corresponding sub-models of the lower level refer to that the sub-model is obtained by performing a union operation on the sub-models of the lower level, equivalent to a relationship between the assembly 2 and the pins 1, 2 and 3 in FIG. 2.

After a plurality of such determinations, all the lowest-level sub-models whose intersection with the characteristic line meets the second preset condition may be obtained. Since each of the lowest-level sub-models only includes one material, a segment correspondence between the characteristic line and the core materials may be obtained.

Further, the second preset condition is that the intersection is not an empty set, that is, in the determination process of each level, the sub-model that does not have an intersection with the characteristic line may be excluded. For example, when calculating the assembly level in FIG. 2, if the intersection of the sub-model assembly 1 and the characteristic line is an empty set, no calculation is performed on the sub-model of the lower level corresponding to the assembly 1.

Specifically, when tracking the core model in FIG. 2, the sub-models in the uppermost level that meet the first preset condition are firstly calculated. For the uppermost level, all the sub-models meet the first preset condition. Then, the intersection of the characteristic line with each of the sub-model assembly 1, the sub-model assembly 2 and the sub-model assembly 3... is determined, and it is determined whether the intersection meets the second preset condition, that is, the sub-models in the level whose intersection with the characteristic line is not an empty set are selected. Further, after the calculation of the assembly level is performed, for example, if a result is that the sub-model assembly 2 meets the second preset condition, then the calculation is performed on the lower level. In this level, the sub-model meeting the first preset condition refers to that the corresponding sub-model of the upper level meets the second preset condition. That is, the sub-model pin 1, the sub-model pin 2, etc. corresponding to the sub-model assembly 2 meet the first preset condition, and in this level, the determination is only performed on these pins. Similarly, if only the intersection of the pin 3 with the characteristic line is not an empty set, then the calculation is performed on the sub-model fuel, reflector and cladding in the lower level of the sub-model pin 3. Since the fuel, the reflector and the cladding are the lowest-level sub-models, the correspondence between the characteristic line and the materials may be obtained after the calculation is performed.

Further, in order to ensure an orderliness of the tracking, after an end of the determination performed on the sub-models in one level, the obtained intersections that are not empty sets and the sub-models in these intersections may be sorted according to a predetermined rule. Specifically, the predetermined rule may be set according to the positions of the elements in these intersections on the characteristic line.

It may be understood that those skilled in the art may use a variety of methods to calculate the intersection of the characteristic line and the sub-model.

In some embodiments, an optional method of calculating the intersection of the characteristic line and the sub-model is used, which may include constructing an auxiliary function used to: calculate a plurality of boundary points of the corresponding sub-model on the characteristic line; calculate a left limit of each of the boundary points on the auxiliary function; and determine, when the left limit meeting a third preset condition, that a line segment between the boundary point and an adjacent boundary point corresponding to the left limit is within the sub-model. A derivation process of the auxiliary function will be explained below.

Firstly, the method of describing the sub-model is explained.

The sub-model is generally complex, and a constructive solid geometry may be used to describe a complex spatial range through the following simple set operations between basic units. The so-called basic unit refers to some basic geometries that may be expressed by mathematical formulas, such as cylinders, spheres, cubes, etc. These geometries may be used to describe related structures in the core, and the basic unit may be expressed as $\{\mathbf{r}|\pm f(\mathbf{r})>0\}$. In the core model, an equation of the basic unit used in the sub-model is generally less than or equal to quadratic, and its unified form may be written as:

$$f\left(\mathbf{r}\right) = a_{11}x^2 + a_{22}y^2 + a_{33}z^2 + a_{12}xy + a_{23}yz + a_{13}xz + a_1 x + a_2 y + a_3 z + a_0$$

In the constructive solid geometry, a more complex spatial range may be obtained by regular intersection, union and complement operations on a plurality of basic units. In the present disclosure, the intersection and union operations are consistent with a set theory, that is,

$$A \cap B = \left\{ \mathbf{r} \middle| \mathbf{r} \in A \text{ and } \mathbf{r} \in B \right\}$$

$$A \cup B = \left\{ \mathbf{r} \middle| \mathbf{r} \in A \text{ or } \mathbf{r} \in B \right\}$$

For the complement operation, a complement of a spatial range closure is used, denoted as $\neg A = \eth_{R3}$ (cl ($A$)), where cl is a sign of closure, and the above form is used to ensure that the calculation result is still an open interval, for example $\neg(x>0)=\eth_{R3}(x\geq0)=x<0$, and $\eth_{R3}(x > 0)=x\leq0$. Furthermore, the complement operation here meets:

$$A = \left\{ \mathbf{r} \middle| f(\mathbf{r}) > 0 \right\} \Rightarrow \neg A = \left\{ \mathbf{r} \middle| -f(\mathbf{r}) > 0 \right\}$$

This operation is more similar to a negative operation in form. It may be proved that the complement operation meets

$$\neg(A \cup B) = (\neg A) \cap (\neg B)$$

$$\neg(A \cap B) = (\neg A) \cup (\neg B)$$

It should be pointed out that the definition method here is only used for description and cannot directly reflect a nature of the point. In practical use, regularization processing is also required. For example, $(x>1)\cup(x<1)$ is regularized to $R^3$, that is, a point of $x=1$ should also be considered as an interior point.

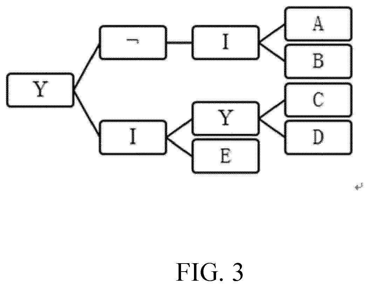

Since the intersection and union operations are binary operations, and the complement operation is a unary operation, as shown in FIG. 3, the calculation process may be drawn as a tree diagram according to an order of the operations. The tree diagram in FIG. 3 represents the operation $\neg(A\cap B)\cup(C\cup D\cap E)$.

It may be understood that each leaf node in FIG. 3 is a basic unit, and the other nodes are operators. The complement operation has a sub-tree, and the intersection and union operations both have two sub-trees, that is, the operation should be performed by two basic units.

Next, the method of constructing the auxiliary function will be explained.

Assuming the characteristic line equation Track = {$\mathbf{r} = \Omega t + \mathbf{r}_0|t\in(-\infty,\infty)$}, and segment$_i$ is used to identify a line segment on the characteristic line, then segment$_i$={$\mathbf{r}=\Omega t+\mathbf{r}_{0,i}|t\in(0,l_i)$}, which may be abbreviated as segment ($\mathbf{r}_{0,i},\Omega,l_i$), where $l$ represents a length of the segment, $\mathbf{r}_0$ represents a starting point of the segment, and $\Omega$ represents a direction vector of the segment.

Further, the Rvachev function is introduced to further describe the sub-model, and the sub-model described based on the constructive solid geometry is described as an inequality form of implicit numbers. Specifically, for a single basic unit, it may be expressed as

$$R(\mathbf{r}) = \pm f(\mathbf{r})$$

The intersection, union and complement operations are defined as:

$$\begin{cases} R_{A\cap B}(\mathbf{r}) = \min\left( R_A(\mathbf{r}), R_B(\mathbf{r}) \right) \\ R_{A\cup B}(\mathbf{r}) = \max\left( R_A(\mathbf{r}), R_B(\mathbf{r}) \right) \\ R_{\neg A}(\mathbf{r}) = -R_A(\mathbf{r}) \end{cases}$$

Therefore, for the spatial range $U$, $R(r)>0$ represents being within $U$, $R(\mathbf{r})<0$ represents being within $\neg U$, and $R(\mathbf{r}) = 0$ represents being within $\eth_{R3}$ ($U\cup(\neg U)$), so all boundary points necessarily meet $R(r)=0$. However, because the regularization processing is to be performed, the point meeting $R(\mathbf{r}) = 0$ is not necessarily a boundary point, but may also be an isolated point or an accumulation point.

Through the Rvachev function, the boundary point needs to meet a condition of

$$R_U\left(\mathbf{r}_0 + \mathbf{\Omega}t\right) = 0, 0 < t < l$$

In order to ensure that $t$ is exactly a boundary point, it needs to check

$$\lim_{\Delta t \to 0} \text{sgn}\left(R_U\left(\mathbf{r}_0 + \mathbf{\Omega}(t + \Delta t)\right)\right) = -\text{sgn}\left(R_U\left(\mathbf{r}_0 + \mathbf{\Omega}(t - \Delta t)\right)\right)$$

where sgn is a sign function, that is, left and right ends of $t$ should have different signs. Then, it is necessary that one end is inside the body and the other end is outside the body, so that a boundary point is formed. Thus, an auxiliary function is defined:

$$r_U(t) = \lim_{\Delta t \to 0} \frac{\text{sgn}\left[R_U\left(\mathbf{r}_0 + \mathbf{\Omega}(t + \Delta t)\right)\right] + \text{sgn}\left[R_U\left(\mathbf{r}_0 + \mathbf{\Omega}(t - \Delta t)\right)\right]}{2} \qquad (1)$$

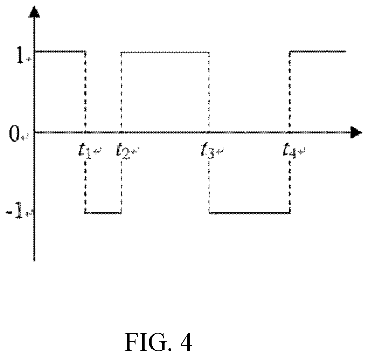

Then in the auxiliary function, $r_U(t) = 1$ is within the spatial range, $r_U(t) = 0$ is at the boundary, and $r_U(t) = -1$ is outside the spatial range. That is, if $r_U(t) = 0$, the obtained solution set is an ordered collection of the intersection points of the characteristic line and the sub-models. Because the left and right ends of all the points that make $r_U(t) = 0$ have different signs, the auxiliary function image in Equation (1) should be zigzag, as shown in FIG. 4.

The auxiliary function may be uniquely determined by an ordered series of zero points and a first segment value. The zero points are set as the ordered series $\{t_1, ..., t_n\}$, and $t_0 = 0$, $t_{n+1} = l$. Because two ends of the intersection point have different signs, if $\delta = r(t_1^-)$ (that is, a left limit value of the boundary point on the auxiliary function is used to indicate whether the line segment $(t_0, t_1)$ is within the body or not), then the auxiliary function may be written as:

$$r_U(t) = \begin{cases} (-1)^i \delta, t_i < t < t_{i+1} \\ 0, t = t_1, t_2, ..., t_n \end{cases}$$

The intersection segment $\cap U$ of the line segment on the characteristic line with the spatial range may be written as:

$$\text{segment} \cap U = \left\{ \mathbf{r}_0 + \mathbf{\Omega}t \middle| t \in \begin{cases} (t_0, t_1) \cup (t_2, t_3) \cup ..., \delta = 1 \\ (t_1, t_2) \cup (t_3, t_4) \cup ..., \delta = -1 \end{cases} \right\}$$

In this equation, the intersection corresponds to an ordered set of line segments located in the spatial range, that is, the auxiliary function value meets a third preset condition $\delta = 1$. In some embodiments, it may take only $\delta = 1$, that is, a solution set obtained by calculating the intersection of the characteristic line with the corresponding sub-model according to the auxiliary function is written as a set of a plurality of line segments whose characteristic line fall within the corresponding sub-models.

The above equation may also be written in a unified form:

$$\text{segment} \cap U = \bigcup_{k=1}^{\lfloor (2n+\delta+3)/4 \rfloor} \left( \mathbf{r}_0 + \mathbf{\Omega}t_{2k-(\delta+3)/2}, \mathbf{\Omega}, t_{2k-(\delta+1)/2} - t_{2k-(\delta+3)/2} \right)$$

where $\lfloor \square \rfloor$ represents taking an integer downward.

The auxiliary function has a significance of performing a dimensionality reduction from three-dimension to one-dimension. All surfaces of the spatial range are converted to points, and a volume is converted to line segments, and these line segments may be represented by only one quantity due to an alternating relationship. The use of the auxiliary function may greatly simplify a difficulty of the intersection, union and complement operation.

Those skilled in the art may use a variety of methods to solve $\delta$ and $\{t_1,...,t_n\}$ in the auxiliary function. In some embodiments, an optional calculation method is used.

In a case that the sub-model includes only one basic unit, it may be directly equivalent to solving:

According to the above definition of the basic unit, this is a quadratic equation in one variable, which may be easily solved and expressed as $\delta$ and $\{t_1,..., t_n\}$ .

$$\begin{cases} \pm f\left(\mathbf{r}_0 + \mathbf{\Omega}t\right) = 0, 0 < t < l \\ \mathrm{sgn}\left(f\left(t+\right)\right) = -\mathrm{sgn}\left(f\left(t-\right)\right) \end{cases}$$

For the sub-model obtained through the intersection and union operation of the basic units, because

$$\mathrm{segment} \cap \left(U_1 \cap U_2\right) = \left(\mathrm{segment} \cap U_1\right) \cap \left(\mathrm{segment} \cap U_2\right)$$

$$\mathrm{segment} \cap \left(U_1 \cup U_2\right) = \left(\mathrm{segment} \cap U_1\right) \cup \left(\mathrm{segment} \cap U_2\right)$$

using the Equation (1), it may be obtained:

$$r_{U_1 \cap U_2}\left(t\right) = \min\left(r_{U_1}\left(t\right), r_{U_2}\left(t\right)\right)$$

$$r_{U_1 \cup U_2}\left(t\right) = \max\left(r_{U_1}\left(t\right), r_{U_2}\left(t\right)\right)$$

$$r_{\neg U}\left(t\right) = -r_{U}\left(t\right)$$

Therefore, for the complement operation, if $r_U(t)$ may be expressed as $[\{t_i\},\delta]$, then the following may be obtained:

$$r_{\neg U}\left(t\right) = \left[\{t_i\}, -\delta\right]$$

For the intersection and union operations, it is necessary to make a determination. That is, the above auxiliary function is firstly used to solve the intersection of the characteristic line with a plurality of basic units so as to obtain a plurality of sub-solution sets, and then corresponding intersection or union operation is performed on these sub-solution sets according to the intersection and union operation relationship between these basic units until the final solution set is obtained.

According to the method of constructing the sub-model described above, in some cases, the sub-model may be obtained by a plurality of operations performed on a plurality of basic units. In these cases, operations should be performed on the corresponding sub-solution sets in the order of operations performed on the basic units. For example, referring to the calculation tree in FIG. 3, to obtain a solution set corresponding to sub-model Y, operations should be firstly performed on A and B to obtain a sub-solution set corresponding to I, and operations are performed on C and D to obtain a sub-solution set corresponding to Y, and so on, until all calculations in the calculation tree are performed and the solution set corresponding to the sub-model Y is obtained.

When performing the intersection and union operations on two sub-solution sets, $r_{U_1}(t)$ is expressed as $[\{t_{1,i}\},\delta_1]$, and $r_{U_2}(t)$ is expressed as $[\{t_{2,i}\},\delta_2]$, then:

$$r_{U_1 \cap U_2}\left(t\right) = \left[ \left\{ \begin{array}{l} t_i \in \{t_{i,1}\} \text{ and } r_{U_2}\left(t_i\right) = 1 \\ t_i \in \{t_{i,2}\} \text{ and } r_{U_1}\left(t_i\right) = 1 \\ t_i \in \{t_{i,1}\} \cap \{t_{i,2}\} \text{ and } r_{U_1}\left(t_i^-\right) = r_{U_2}\left(t_i^-\right) \end{array} \right\}, \min\left(\delta_1, \delta_2\right) \right] \qquad (2)$$

where a third line in a first term in Equation (2) is to ensure $r_{U_1 \cap U_2}\left(t_i^-\right) \neq r_{U_1 \cap U_2}\left(t_i^+\right)$ .

Similarly, a result of $r_{U_1 \cup U2}(t)$ may be:

$$r_{U_1 \cup U_2}(t) = \left[ \left[ \begin{cases} t_i \in \{t_{i,1}\} \text{ and } r_{U_2}(t_i) = -1 \\ t_i \in \{t_{i,2}\} \text{ and } r_{U_1}(t_i) = -1 \\ t_i \in \{t_{i,1}\} \cap \{t_{i,2}\} \text{ and } r_{U_1}\left(t_i^-\right) = r_{U_2}\left(t_i^-\right) \end{cases} \right\}, \max(\delta_1, \delta_2) \right] \quad (3)$$

Thus, when performing intersection operation and union operation, a function value of an element of one sub-solution set in another sub-solution set should be determined, and a direct determination may only be performed by using a search algorithm, which has a low efficiency. In some embodiments, a method of determining all points at once is provided, including: setting a first pointer and a second pointer to respectively point to elements in the two sub-solution sets located on leftmost side of a number axis; a solution set acquisition step, including: when determining that a left limit on the corresponding auxiliary function of the element pointed to by the first pointer or the second pointer located on a far right side of the number axis meets a fourth preset condition, incorporating the element pointed to by the first pointer or the second pointer located on a far left side of the number axis into a solution set of the intersection or union operation, and moving the first pointer or the second pointer on the far left side to the right so as to point to a next element; when determining that the elements pointed to by the first pointer and the second pointer are equal, determining respective left limits of the elements on the auxiliary function corresponding to the two sub-solution sets, and when determining that the left limit meets a fifth preset condition, incorporating the element into the solution set of the intersection or union operation, and moving the first pointer or the second pointer to the right of the number axis so as to point to a next element; and repeating the solution set acquisition step until the solution set after the intersection or union operation of the two sub-solution sets is obtained.

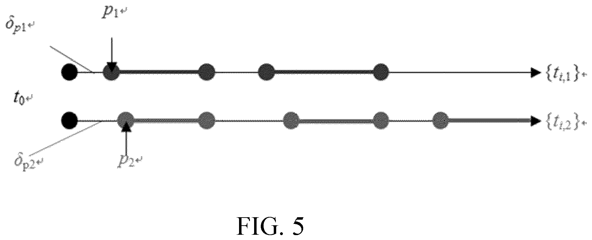

Specifically, the determination method takes advantage of the orderliness of $\{t_{1,i}\}$ and $\{t_{2,j}\}$. As shown in FIG. 5, a first pointer PI and a second pointer P2 are set. Initially, the first pointer P1 and the second pointer P2 point to first elements of two ordered series, respectively. If the series are empty, the first pointer P1 and the second pointer P2 may point to infinity. $\delta_{p_1}$ and $\delta_{p_2}$ represent the left limits of the elements pointed to by the pointers P1 and P2 on the corresponding auxiliary function, and the initial value is $\delta_1$ and $\delta_2$.

Since the first pointer P1 and the second pointer P2 initially point to the elements on the leftmost side of the number axis in the two sub-intersections, and in each movement, only the pointer on the far left side is moved or both pointers are moved simultaneously, it may be ensured that if PI is on the left side of P2, the element pointed to by P2 is a first number greater than the element pointed to by P1 in $\{t_{i,2}\}$, that is, the element pointed to by P1 is located in a segment before P2, that is, $r_{U_2}(p_1)=\delta_{p_2}$. Otherwise, if P2 is before P1, then $r_{U_1}(p_2)=\delta_{p_1}$. In this way, the determination of the first two items in Equation (2) and Equation (3) may be performed directly. That is, it is determined whether the left limit on the corresponding auxiliary function of the element pointed to by the first pointer or the second pointer that is on a far right side meets the fourth preset condition or not. It may be obtained from Equation (2) and Equation (3) that the fourth preset condition is that the left limit is 1 when the intersection operation is performed, and the fourth preset condition is that the left limit is -1 when the union operation is performed. After the determination is performed, the previous pointer is moved by one space to the right, and the determination is further performed.

When the pointer PI and the pointer P2 coincide, that is, when the elements pointed to by P1 and P2 are equal, it is only required to determine $\delta_{p_1}$ and $\delta_{p_2}$. When $\delta_{p_1}=\delta_{p_2}$, the elements pointed to by P1 and P2 are included in the solution set, that is, the fifth preset condition is that the left limits are equal. After the determination is performed, P1 and P2 are simultaneously moved by one place to the right, and the determination is further performed.

The above solution set acquisition step may end after P1 and P2 are moved to infinity, that is, after the determination of all elements is performed. With this method, a time complexity of a single intersection or union operation is reduced to $O(n)$. In the entire intersection, union and complement algorithm, the calculation time of the complement operation may be ignored. A total number of the intersection and union operations is related to the calculation tree of the basic units. Assuming that the intersection and union operations are performed for totally b levels, a maximum number of calculations is the number of calculations $O((b-1) \cdot 2^{b-1})$ in a case of a full binary tree without points being deleted.

In the entire calculation process, only the intersection with the basic unit needs to be solved by equation, and the subsequent process is only determination, so that the efficiency is high. The main calculation time is concentrated on the calculation of the intersection with the basic unit. The calculation cost is very low, which may be considered to be equivalent to the calculation time of a single E index, that is, a single calculation time of one segment in a long characteristic line method in the related art.

When the method of calculating the intersection of the characteristic line and the sub-model described above is used to track the characteristic line, an origin in the characteristic line is firstly moved to a very far value $\mathbf{r}_{-\infty}$ in a negative direction, and a very large length $l_\infty$ is taken, then the characteristic line may be approximately written as segment $(\mathbf{r}_{-\infty}, \Omega, l_\infty)$. According to the process of constructing the core model described above, the following may be obtained:

$$\text{Track} \cap U_{top} = \text{segment}_{top}$$

It may be seen that $\text{segment}_{top} \subset U_{top}$. It is next considered to solve for an intersection segment $\cap$Cell between any level Cell with a spatial range of $U$ and a line segment segment $\subset U$ within the spatial range.

The level Cell is the lowest-level Cell $(U, m)$, that is, each sub-model in the level Cell includes only one material, then the following may be obtained:

$$\text{segment} \cap \text{Cell} = \left( \text{segment}, m \right) \tag{4}$$

That is, the correspondence relationship between the characteristic line and the material is obtained.

If the level Cell is a non-lowest-level Cell $(U, \text{Universe})$, where $\text{Universe} = \bigcup\limits_{i=1}^{I} \text{Cell}_{down,i}$, then the following may be obtained:

$$\text{segment} \cap \text{Cell} = \left( \text{segment} \cap U \right) \cap \text{Universe} = \bigcup\limits_{i=1}^{I} \text{segment} \cap \text{Cell}_{down,i}$$

Further, in combination with the content described above, by performing an intersection operation on the characteristic line segment and the spatial range $U_{down,i}$ of a sub-model $\text{Cell}_{down,i}$ meeting the first preset condition in the level Cell, the following may be obtained:

$$\text{segment} \cap U_{down,i} = \bigcup\limits_{j=1}^{J_i} \text{segment}_{i,j}$$

where $J_i$ represents the number of the line segments formed after the characteristic line segment is cut by the spatial range $U_{down,i}$ of the sub-model.

Therefore, the following may be obtained:

$$\text{segment} \cap \text{Cell}_{down,i} = \bigcup\limits_{j=1}^{J_i} \text{segment}_{i,j} \cap \text{Cell}_{down,i}$$

After a substitution, the following may be obtained:

$$\text{segment} \cap \text{Cell} = \bigcup\limits_{i=1}^{I} \bigcup\limits_{j=1}^{J_i} \text{segment}_{i,j} \cap \text{Cell}_{down,i} \tag{5}$$

where Cell is a level, and $I$ is the number of the sub-models meeting the first preset condition in the level Cell.

Due to $\text{segment}_{i,j} \subset U_{down,i}$, $\text{segment}_{i,j} \cap \text{Cell}_{down,i}$ may be further written according to Equation (4) or Equation (5). In this way, the upper-level sub-models may be gradually decomposed downwards until they all become the lowest-level sub-models. According to Equation (5), the following may be finally obtained:

$$\text{segment} \cap \text{Cell} = \bigcup \left( \text{segment}_i, m_i \right)$$

In this way, the entire tracking process is performed. In the entire tracking process, the main calculation time is concentrated on the calculation of the line segment of the characteristic line and the sub-model. The number of the calculations is equal to a number of all sub-model lists passed by the characteristic line. If the entire calculation model may be represented by a binary tree, then the number of calculations may be estimated to be twice the number of the segments. If it is considered that each lowest-level sub-model includes four basic units on average, the calculation time is equivalent to multiplying the number of the segments by about 8 times of E-index calculation time.

The embodiments further provide a method of calculating core neutron physics, including a modeling step, a tracking step, and an iterative calculation step.

The modeling step may include constructing a core model. The core model is constructed to divide a spatial range of a core into a plurality of levels, and each of the plurality of levels includes a plurality of sub-models. At least one of the sub-models in one level of the plurality of levels forms one of the sub-models in an upper level, and each of the sub-models in a lowest level includes only one material of the core. All the sub-models of the uppermost level may form the spatial range of the core after a union operation.

The tracking step may include defining a characteristic line and tracking the characteristic line according to the method of tracking the characteristic line described above.

The iterative calculation step may include performing an iterative calculation based on a result of tracking the characteristic line so as to obtain a solution of a neutron transport equation of the core.

The embodiments further provide an apparatus of calculating core neutron physics, including a modeling module, a characteristic line tracking module, and an iterative calculation module.

The modeling module is used to construct a core model. The core model is constructed to divide a spatial range of a core into a plurality of levels, and each of the plurality of levels includes a plurality of sub-models. At least one of the sub-models in one level of the plurality of levels forms one of the sub-models in an upper level, and each of the sub-models in a lowest level includes only one material of the core. All the sub-models of the uppermost level may form the spatial range of the core after a union operation.

The characteristic line tracking module is used to define a characteristic line and tracking the characteristic line according to the method of tracking the characteristic line described above.

The iterative calculation module is used to perform an iterative calculation based on a result of tracking the characteristic line so as to obtain a solution of a neutron transport equation of the core.

The method and apparatus of calculating core neutron physics of the present disclosure may be implemented by using the method of tracking the characteristic line described above, so that calculation steps may be saved, and the calculation efficiency may be improved.

The embodiments further provide a reactor model that may be used to calculate and describe a state of various physical quantities in the reactor. The method of calculating core neutron physics is mainly used to calculate and describe a neutron flux density, reactivity, reaction rate distribution and other physical quantities related to neutronics. The construction of the reactor model generally includes modeling and numerical processing. The modeling is to input the reactor model to a computer in a given way, and the numerical processing is to convert the input model into a form required for calculation. In the reactor model of the embodiment of the present disclosure, the numerical processing step subsequent to the modeling described above is performed by using the method of calculating core neutron physics described above, so that the amount of the calculation in the modeling process may be saved and the calculation efficiency may be improved.

The embodiments further provided an apparatus of simulating a reactor. The apparatus of simulating the reactor may be used to simulate an actual operating condition of the reactor, in which a simulation and a calculation of the neutron physics of the core are important. Therefore, the embodiments provide an apparatus of simulating the reactor including the apparatus of calculating the core neutron physics described above. By using the apparatus of simulating the reactor for reactor simulation, the calculation steps may be saved, and the calculation efficiency may be improved.

The embodiments further provide a computer-readable storage medium having instructions stored thereon. The instructions are used to implement the method of calculating the core neutron physics described above.

The following will further illustrate the technical solutions involved in the embodiments described above in conjunction with several specific examples.

Firstly, a calculation method of solving the intersection of the characteristic line and the basic unit, and a calculation method of the intersection, union and complement operations are given.

Suppose a linear equation is $(x_0+\Omega_x t, y_0+\Omega_y t, z_0+\Omega_z t)$, according to the equation of the above basic unit:

$$f(\mathbf{r}) = a_{11}x^2 + a_{22}y^2 + a_{33}z^2 + a_{12}xy + a_{23}yz + a_{13}xz + a_1 x + a_2 y + a_3 z + a_0$$

The following may be obtained:

$$At^2 + Bt + C = 0$$

$$\begin{cases} A = a_{11}\Omega_x^2 + a_{22}\Omega_y^2 + a_{33}\Omega_z^2 + a_{12}\Omega_x\Omega_y + a_{23}\Omega_y\Omega_z + a_{13}\Omega_x\Omega_z \\ B = \left(2a_{11}x_0 + a_{12}y_0 + a_{13}x_0 + a_1\right)\Omega_x + \\ \quad \left(a_{12}x_0 + 2a_{22}y_0 + a_{23}x_0 + a_2\right)\Omega_y + \\ \quad \left(a_{13}x_0 + a_{23}y_0 + 2a_{33}x_0 + a_3\right)\Omega_z \\ C = f\left(x_0, y_0, z_0\right) \end{cases}$$

The following determination should be made when solving the above equations:

- if $A \neq 0$

  - if $B^2-4AC \leq 0$, then $\{t_i\}=\varnothing$, and $\delta$ and $A$ have the same sign, because a single solution is also a removable point;

  - if $B^2-4AC>0$, two solutions $t_1$ and $t_2$ may be obtained.

    - $t_1<t_2 \leq 0<l$, $\{t_i\}=\varnothing$, $\delta$ and $A$ have the same sign;

    - $t_1 \leq 0<t_2<l$, $\{t_i\}=\{t_2\}$, $\delta$ and $A$ have different signs;

    - $t_1 \leq 0<l \leq t_2$, $\{t_i\}=\varnothing$, $\delta$ and $A$ have different signs;

    - $0<t_1<t_2<l$, $\{t_i\}=\{t_1,t_2\}$, $\delta$ and $A$ have the same sign;

    - $0<t_1<l \leq t_2$, $\{t_i\}=\{t_1\}$, $\delta$ and $A$ have the same sign;

    - $0<l \leq t_1<t_2$, $\{t_i\}=\varnothing$, $\delta$ and $A$ have the same sign;

- if $A=0$, then $B \neq 0$, a single solution $t$ may be obtained

  - if $t \leq 0$, then $\{t_i\}=\varnothing$, $\delta$ and $B$ have the same sign;

  - if $0<t<l$, then $\{t_i\}=\{t\}$, $\delta$ and $B$ have the same sign;

  - if $l \leq t$, then $\{t_i\}=\varnothing$, $\delta$ and $B$ have different signs;

where if $\{t_i\}=\varnothing$, then $\delta$ represents whether $(0,l)$ is within the body or not, and if $\{t_i\}$ is not empty, then $\delta$ represents whether $(0,t_1)$ is within the body or not.

For the complement operation, $\{t_i|i = 0,1,...,n\}$ and $\delta$ are input, and $\{t_i|i = 0,1,...,n\}$ unchanged and $-\delta$ are output.

For the intersection and union algorithm, the following calculation method is given.

input $\left\{ t_{i,1} \middle| i = 0,1,...,n_1 \right\}$ , $\left\{ t_{i,2} \middle| i = 0,1,...,n_2 \right\}$ , $\delta_1$ , $\delta_2$

$p_1 = 0$ , $p_2 = 0$ , $res = \{\ \}$

$$\delta = \begin{matrix} \cap : \min\left(\delta_1, \delta_2\right) \\ \cup : \max\left(\delta_1, \delta_2\right) \end{matrix}$$

```
while ( p₁ ≤ n₁ or p₂ ≤ n₂ )
```

$$t_1 = \begin{cases} t_{p_1,1}, & p_1 \le n_1 \\ \infty, & p_1 > n_1 \end{cases} \ , \ t_2 = \begin{cases} t_{p_2,2}, & p_1 \le n_1 \\ \infty, & p_1 > n_1 \end{cases}$$

```
    if  t₁ = t₂
```

$\qquad$ if $\left(-1\right)^{p_1} \delta_1 = \left(-1\right)^{p_2} \delta_2$

$\qquad\quad res = \left\{ res, t_1 \right\}$

```
        end if
    t₁++, t₂++
    else
        if  t₁ < t₂
```

$\qquad\quad$ if $\begin{matrix} \cap : \left(-1\right)^{p_2} \delta_2 = 1 \\ \cup : \left(-1\right)^{p_2} \delta_2 = -1 \end{matrix}$

$\qquad\qquad res = \left\{ res, t_1 \right\}$

```
            end
```

```
        t₁++
    else
    if    ∩:(−1)^{P₁} δ₁ = 1
          ∪:(−1)^{P₁} δ₁ = −1
          res = {res, t₂}
    end if
        t₂++
    end if
end if
end while
```

$$t_1{+}{+}$$
else
$$\text{if} \quad \begin{aligned}&\cap:(-1)^{P_1}\,\delta_1=1\\&\cup:(-1)^{P_1}\,\delta_1=-1\end{aligned}$$
$$res=\{res,t_2\}$$
end if
$$t_2{+}{+}$$
end if
end if
end while

The specific example also provides a tracking method.

For the sub-model Cell in each level:

input $s(\mathbf{r}_0,\mathbf{\Omega},l)\subset U$

if  filling material

$$res=(s,m)$$

else

$$res = s \cap \text{Universe} = \bigcup (s_i,m)$$

end if
return $res$

For the union set Universe of the sub-model:

input $s(\mathbf{r}_0,\mathbf{\Omega},l)\subset U$

$$res=\varnothing$$

for all $\text{Cell}_{down,j}$

$$\bigcup s_{j,k}=s\cap U_{down,j}$$

$$res=res\cup\bigcup\left(s_{j,k}:\text{Cell}_{down,j}\right)$$

end

$$res = \texttt{sort}\,(\,res\,) = \bigcup \left(s_i : \text{Cell}_{down,i}\right)$$

$$l_{curr} = 0$$

$$\texttt{for all}\ \left(s_i : \text{Cell}_{down,i}\right)\ \texttt{in}\ res$$

$$\left(s_i : \text{Cell}_{down,i}\right) = s_i \cap \text{Cell}_{down,i} = \bigcup \left(s_j, m_j\right)$$

```
end
return res
```

The specific example further provides a test calculation performed on the benchmark problems Takeda and C5G7 according to the tracking method of the present disclosure.

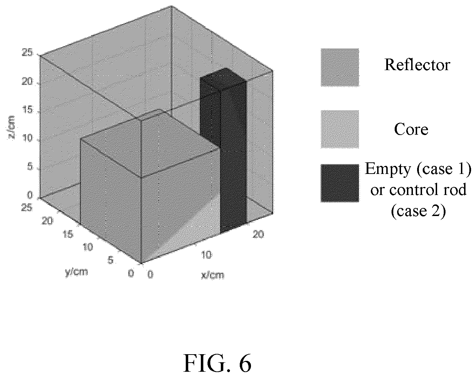

The Takeda problem is a two-group three-dimensional simplified core model, and a geometric arrangement is shown in FIG. 6.

In FIG. 6, planes where x=0, y=0 and z=0 are reflective boundary conditions, and the rest planes are vacuum boundary conditions. There are two energy groups. A filling material in a red part of case 1 is empty, and a filling material in a red part of case 2 is a control rod. Parameters in the calculation are selected as: a grid size of 0.5 cm, a ray density of 0.05 cm×0.05 cm, a Legendre-Chebyshev quadrature group as a quadrature group, 8 polar angles and 16 azimuth angles.

The calculation results are shown in Table 1

Table 1 Calculation results for Takeda problem

|  | case1 | | case2 | |
| --- | --- | --- | --- | --- |
|  | $k_{eff}$ | error/pcm | $k_{eff}$ | error/pcm |
| Reference | 0.977 80($\pm$60 pcm) | - | 0.962 40($\pm$60 pcm) | - |
| Calculation results | 0.977 59 | -21 | 0.962 57 | 17 |

Table 1 shows a correctness of the tracking results, but here is more concerned about tracking efficiency:

Table 2 Tracking efficiency for Takeda problem

| Number of energy groups | Time of single internal iteration /s | Time of tracking characteristic line /s | Time ratio | Number of equivalent groups |
| --- | --- | --- | --- | --- |
| 2 | 10.466 | 6.445 | 61.58% | 1.23 |

The time ratio refers to the time of tracking the characteristic line divided by the time of the internal iteration. In our test, if the Takeda problem is not accelerated, 370 internal iterations are needed. In this case, the time of tracking the characteristic line only takes 1.66% of the time. If the method of generating the characteristic line in real time is adopted, it only needs to pay 61.58% more calculation time to avoid all segment information storage. In order to better illustrate the tracking effect, the number of equivalent energy groups (that is, the time ratio multiplied by the number of energy groups) is proposed. Because geometric tracking has nothing to do with the number of energy groups, the number of equivalent energy groups may not change even if there are more energy groups. Therefore, if the number of energy groups for the Takeda problem is increased to eight, the number of the equivalent energy groups is still 1.23, and the time ratio may be further reduced to 15.38%.

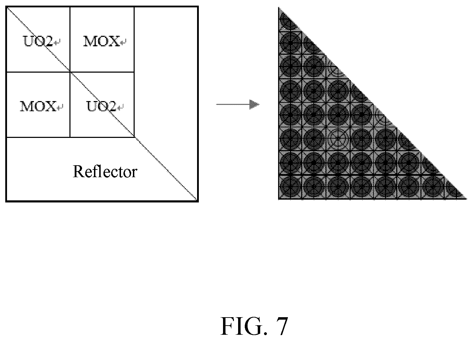

Similarly, the above test was conducted on the C5G7 problem. In order to improve the difficulty of tracking, one-eighth processing is used here, as shown in FIG. 7. Because the C5G7 problem is symmetrical, it is divided into two on the diagonal. In the calculation, a C5G7-2D calculation example is used. A three-dimensional problem is formed by supplementing the reflective boundary condition in an axial direction. There are four boxes of assemblies, each box of assembly includes 17×17 pins, and each pin is divided into 3 rings and 8 sectors.

The calculation results are shown in Table 3, which indicates that the tracking is correct.

# EP 3 951 634 A1

Table 3 Calculation results for C5G7 problem

|  | $k_{eff}$ | $k_{eff}$deviation/pcm |
| --- | --- | --- |
| Reference | 1.18655 | - |
| Calculation results | 1.18519 | -136 |

The tracking efficiency is shown in Table 4.

Table 4 Tracking efficiency of C5G7 problem

| Number of energy groups | Time of single internal iteration/s | Time of tracking characteristic line/s | Time ratio | Number of equivalent groups |
| --- | --- | --- | --- | --- |
| 7 | 136.60 | 156.66 | 114.69% | 8.03 |

Compared with the Takeda problem, the tracking efficiency decreases, mainly because the structure is much more complicated and a quadratic surface exists. However, in general, it meets the estimation that the original tracking time is equivalent to the calculation time of a single internal iteration, which may achieve a fast tracking of the characteristic line with a high tracking efficiency, and support a real-time calculation of the characteristic line at an acceptable time cost.

In the description of the specification, the description with reference to the terms "an embodiment", " some embodiment", "exemplary embodiment", "example", "specific example" or "some examples" means that the specific feature, structure, material or characteristic described in conjunction with the embodiment or example is included in at least one embodiment or example of the present disclosure. In the specification, the schematic representations of the above terms do not necessarily refer to the same embodiment or example. Moreover, the specific features, structures, materials or characteristics described may be combined in any one or more embodiments or examples in a suitable manner.

The terms "first" and "second" are used for descriptive purposes and cannot be understood as indicating or implying relative importance or implicitly indicating the number of indicated technical features. Thus, the features defined as "first" and "second" may explicitly or implicitly include one or more of the features. In the description of the present disclosure, "a plurality of" means at least two, such as two, three, etc., unless otherwise specifically defined.

Although the embodiments of the present disclosure have been shown and described above, it may be understood that the above embodiments are exemplary and should not be construed as limiting the present disclosure. Those ordinary skilled in the art may make changes, modifications, replacements and transformations on the above-described embodiments within the scope of the present disclosure.

**Claims**

1. A method of tracking a characteristic line in a core model, wherein the core model is configured to divide a spatial range of a core into a plurality of levels, and each of the plurality of levels comprises a plurality of sub-models, wherein at least one of the plurality of sub-models in one level of the plurality of levels belongs to one of the plurality of sub-models in an upper level, each of the plurality of sub-models in a lowest level comprises only one material of the core; a union operation on all the sub-modules in each upper level and an intersection operation with a spatial range of the upper level are performed for all the sub-modules in each upper level so as to form the sub-model in the upper level, and an uppermost level is the core model; the method comprises:

   determining, sequentially from the uppermost level to the lowest level, whether an intersection of the sub-model meeting a first preset condition in each of the plurality of levels and the characteristic line segment meets a second preset condition or not; and
   obtaining an intersection, that meets the second preset condition, of the sub-model meeting the first preset condition in the lowest level and the characteristic line, so as to obtain a segment correspondence between the characteristic line and the material of the core according to the intersection obtained.

2. The method of tracking the characteristic line according to claim 1, wherein,

   the first preset condition for the uppermost level is that the sub-model is located in the uppermost level; and
   the first preset condition for a non-uppermost level is that the sub-model in the non-uppermost level corresponds

**17**

to the sub-model whose intersection with the characteristic line segment meets the second preset condition in the upper level of the non-uppermost level.

3. The method of tracking the characteristic line according to claim 1, wherein the second preset condition is that the intersection is not an empty set.

4. The method of tracking the characteristic line according to claim 1, further comprising:
sorting, in response to an end of a determination performed on each of the plurality of levels, the sub-models corresponding to the intersection meeting the second preset condition according to a predetermined rule.

5. The method of tracking the characteristic line according to claim 4, wherein the predetermined rule is set according to a position of the intersection meeting the second predetermined condition on the characteristic line.

6. The method of tracking the characteristic line according to claim 1, further comprising: prior to the determining whether an intersection of the sub-model meeting a first preset condition in each of the plurality of levels and the characteristic line segment meets a second preset condition or not,
calculating the intersection of the characteristic line segment and the corresponding sub-model, comprising:
constructing an auxiliary function used to:

calculate a plurality of boundary points of the corresponding sub-model on the characteristic line segment;
calculate a left limit of each of the boundary points on the auxiliary function; and
determine, in response to the left limit meeting a third preset condition, that a line segment between the boundary point and an adjacent boundary point corresponding to the left limit is within the sub-model.

7. The method of tracking the characteristic line according to claim 6, wherein the auxiliary function is:

$$r_U\left(t\right) = \lim_{\Delta t \to 0} \frac{\operatorname{sgn}\left[R_U\left(\mathbf{r}_0 + \mathbf{\Omega}\left(t + \Delta t\right)\right)\right] + \operatorname{sgn}\left[R_U\left(\mathbf{r}_0 + \mathbf{\Omega}\left(t - \Delta t\right)\right)\right]}{2}$$

where $t$ represents a point on a characteristic line segment, and in response to the point $t$ meeting $r_U(t)=0, 0<t<l$, the point $t$ is determined to be a boundary point, *sgn* represents a sign determination function, $l$ represents a length of the characteristic line segment, $\mathbf{r}_0$ represents a starting point of the characteristic line segment, and $\Omega$ represents a direction vector of the characteristic line segment; and
wherein it is determined that a line segment between the point $t$ and an adjacent boundary point corresponding to the left limit is within the sub-model, in response to $r_U(t)=1$.

8. The method of tracking the characteristic line according to claim 6 or 7, wherein a solution set obtained by calculating the intersection of the characteristic line segment and the corresponding sub-model according to the auxiliary function comprises an ordered set of a plurality of line segments of the characteristic line falling within the corresponding sub-model.

9. The method of tracking the characteristic line according to claim 8, wherein the solution set is obtained by:

solving, in response to the corresponding sub-model comprising a plurality of basic units performed with a logical operation, an intersection of the characteristic line segment and the plurality of basic units respectively by using the auxiliary function, so as to obtain a plurality of sub-solution sets, wherein the basic unit is a mathematical model of a basic geometry; and
performing an intersection operation, a union operation or a complement operation on the plurality of sub-solution sets according to an intersection operation relationship, a union operation relationship or a complement operation relationship between the plurality of basic units, respectively, until the solution set is obtained.

10. The method of tracking the characteristic line according to claim 9, wherein for each basic unit $U$, the auxiliary function $r_U(t)$ is expressed as $[\{t_i\}, \delta]$, where $t_i$ represents a boundary point, and $\delta$ represents a left limit of the boundary point.

11. The method of tracking the characteristic line according to claim 9, wherein the performing an intersection operation, a union operation or a complement operation on the plurality of sub-solution sets comprises:
selecting two sub-solution sets of the plurality of sub-solution sets each time to perform the intersection operation or the union operation, until a final solution set is obtained.

12. The method of tracking the characteristic line according to claim 11, wherein one of the two sub-solution sets $r_{U_1}(t)$ is expressed as $[\{t_{1,i}\}, \delta_1]$, and the other one of the two sub-solution sets $r_{U_2}(t)$ is expressed as $[\{t_{2,i}\}, \delta_2]$, and a result of $r_{U_1 \cap U2}(t)$ in a case of the intersection operation is

$$r_{U_1 \cap U_2}(t) = \left[ \left\{ \begin{array}{l} t_i \in \left\{ t_{i,1} \right\} \text{ and } r_{U_2}(t_i) = 1 \\ t_i \in \left\{ t_{i,2} \right\} \text{ and } r_{U_1}(t_i) = 1 \\ t_i \in \left\{ t_{i,1} \right\} \cap \left\{ t_{i,2} \right\} \text{ and } r_{U_1}(t_i^-) = r_{U_2}(t_i^-) \end{array} \right\}, \min\left(\delta_1, \delta_2\right) \right].$$

13. The method of tracking the characteristic line according to claim 11, wherein one of the two sub-solution sets $r_{U_1}(t)$ is expressed as $[\{t_{1,i}\}, \delta_1]$, and the other one of the two sub-solution sets $r_{U_2}(t)$ is expressed as $[\{t_{2,i}\}, \delta_2]$, and a result of $r_{U_1 \cup U2}(t)$ in a case of the intersection operation is

$$r_{U_1 \cup U_2}(t) = \left[ \left\{ \begin{array}{l} t_i \in \left\{ t_{i,1} \right\} \text{ and } r_{U_2}(t_i) = -1 \\ t_i \in \left\{ t_{i,2} \right\} \text{ and } r_{U_1}(t_i) = -1 \\ t_i \in \left\{ t_{i,1} \right\} \cap \left\{ t_{i,2} \right\} \text{ and } r_{U_1}(t_i^-) = r_{U_2}(t_i^-) \end{array} \right\}, \max\left(\delta_1, \delta_2\right) \right].$$

14. The method of tracking the characteristic line according to any one of claims 9 to 13, wherein the performing an intersection operation, a union operation or a complement operation on the plurality of sub-solution sets further comprises:
selecting one sub-solution set of the plurality of sub-solution sets each time to perform the complement operation.

15. The method of tracking the characteristic line according to claim 14, wherein the one sub-solution set $r_U(t)$ is expressed as $[\{t_i\}, \delta]$, and a result of $r_{\neg U}(t)$ in a case of the complement operation is

$$r_{\neg U}(t) = \left[ \left\{ t_i \right\}, -\delta \right].$$

16. The method of tracking the characteristic line according to claim 15, wherein the performing the intersection operation or the union operation on two sub-solution sets of the sub-solution sets comprises:

setting a first pointer and a second pointer to initially point to elements located at a leftmost side of a number axis in the two sub-solution sets, respectively;
performing a solution set acquisition step, comprising: in response to determining that a left limit, on the corresponding auxiliary function, of the element pointed to by the first pointer or the second pointer located on a far right side of the number axis meets a fourth preset condition, incorporating the element pointed to by the first pointer or the second pointer located on a far left side of the number axis into a solution set obtained by the intersection operation or the union operation; and moving the first pointer or the second pointer that is located on the far left side of the number axis to the right of the number axis so as to point to a next element;
determining, in response to determining that the element pointed to by the first pointer is equal to the element pointed to by the second pointer, left limits of the element on the auxiliary function corresponding to the two sub-solution sets, and in response to determining that the left limit meets a fifth preset condition, incorporating the element into the solution set obtained by the intersection operation or the union operation, and moving the first pointer or the second pointer to the right of the number axis so as to point to a next element; and
repeating the solution set acquisition step until the solution set after the intersection operation or the union operation performed on the two sub-solution sets is obtained.

17. The method of tracking the characteristic line according to any one of claims 1 to 5, wherein the intersection of the sub-model and the characteristic line segment is expressed as

$$\text{segment} \cap U_{down,i} = \bigcup_{j=1}^{J_i} \text{segment}_{i,j}$$

where segment represents a line segment on the characteristic line, and $J_i$ represents a number of line segments formed by cutting the characteristic line segment segment by the spatial range $U_{down,i}$ of the sub-model.

18. The method of tracking the characteristic line according to claim 17, wherein the intersection of all the sub-models meeting the first preset condition in each of the levels with the characteristic line segment is expressed as

$$\text{segment} \cap \text{Cell} = \bigcup_{i=1}^{I} \bigcup_{j=1}^{J_i} \text{segment}_{i,j} \cap \text{Cell}_{down,i}$$

where Cell represents one of the levels, and $I$ represents a number of the sub-models meeting the first preset condition in the Cell.

19. A method of calculating core neutron physics, comprising:

a modeling step, comprising: constructing a core model, wherein the core model is constructed to divide a spatial range of a core into a plurality of levels, and each of the plurality of levels comprises a plurality of sub-models, wherein at least one of the sub-models in one level of the plurality of levels belongs to one of the sub-models in an upper level, each of the sub-models in a lowest level comprises only one material of the core; a union operation on all the sub-modules in each upper level and an intersection operation with a spatial range of the upper level are performed for all the sub-modules in each upper level so as to form the sub-model in the upper level, and an uppermost level is the core model;
a tracking step, comprising: defining a characteristic line and tracking the characteristic line according to the method of tracking the characteristic line according to any one of claims 1 to 18; and
an iterative calculation step, comprising: performing an iterative calculation based on a result of tracking the characteristic line so as to obtain a solution of a neutron transport equation of the core.

20. A reactor model constructed by using the method of calculating the core neutron physics according to claim 19.

21. An apparatus of calculating core neutron physics, comprising:

a modeling module configured to construct a core model, wherein the core model is constructed to divide a spatial range of a core into a plurality of levels, and each of the plurality of levels comprises a plurality of sub-models, wherein at least one of the sub-models in one level of the plurality of levels belongs to one of the sub-models in an upper level, each of the sub-models in a lowest level comprises only one material of the core; a union operation on all the sub-modules in each upper level and an intersection operation with a spatial range of the upper level are performed for all the sub-modules in each upper level so as to form the sub-model in the upper level, and an uppermost level is the core model;
a characteristic line tracking module configured to define a characteristic line and tracking the characteristic line according to the method of tracking the characteristic line according to any one of claims 1 to 10; and
an iterative calculation module configured to perform an iterative calculation based on a result of tracking the characteristic line so as to obtain a solution of a neutron transport equation of the core.

22. An apparatus of simulating a reactor, comprising:
the apparatus of calculating the core neutron physics according to claim 21.

23. A computer-readable storage medium having instructions stored thereon, wherein the instructions are executable to implement the method of calculating the core neutron physics according to claim 19.

FIG. 1

```
                          ┌──────────────┐
                          │     Core     │
                          └──────────────┘

   ┌────────────┐  ┌────────────┐  ┌────────────┐  ┌────────────┐
   │ Assembly 1 │  │ Assembly 2 │  │ Assembly 3 │  │    . . .    │
   └────────────┘  └────────────┘  └────────────┘  └────────────┘

 ┌──────────┐  ┌──────────┐  ┌──────────┐  ┌──────────┐
 │  Pin 1   │  │  Pin 2   │  │  Pin 3   │  │   . . .   │
 └──────────┘  └──────────┘  └──────────┘  └──────────┘

          ┌──────────┐  ┌──────────┐  ┌──────────┐
          │   Fuel   │  │ Reflector│  │ Cladding │
          └──────────┘  └──────────┘  └──────────┘
```

FIG. 2

FIG. 3

FIG. 4

FIG. 5

FIG. 6

FIG. 7

## INTERNATIONAL SEARCH REPORT

| International application No. |
| --- |
| **PCT/CN2021/098806** |

| A. | CLASSIFICATION OF SUBJECT MATTER |
| --- | --- |
| | G06F 30/20(2020.01)i |

According to International Patent Classification (IPC) or to both national classification and IPC

| B. | FIELDS SEARCHED |
| --- | --- |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS, CNTXT, DWPI, SIPOABS, CNKI, IEEE: 反应堆, 堆芯, 特征线, 追踪, 子模型, 层级, 中子, reactor, core, characteristic, track+, sub-model, hierarchical, neutron

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 111666689 A (CHINA INSTITUTE OF ATOMIC ENERGY) 15 September 2020 (2020-09-15)<br>claims 1-13, description paragraphs [0069]-[0149] | 1-23 |
| A | CN 106528916 A (HEFEI INSTITUTES OF PHYSICAL SCIENCE, CHINESE ACADEMY OF SCIENCES) 22 March 2017 (2017-03-22)<br>entire document | 1-23 |
| A | CN 110427707 A (CHINA INSTITUTE OF ATOMIC ENERGY) 08 November 2019 (2019-11-08)<br>entire document | 1-23 |
| A | CN 108734730 A (XI'AN JIAOTONG UNIVERSITY) 02 November 2018 (2018-11-02)<br>entire document | 1-23 |
| A | US 2015142411 A1 (TERRAPOWER LLC) 21 May 2015 (2015-05-21)<br>entire document | 1-23 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 August 2021** | **26 August 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/098806**

| Patent document cited in search report | | | Publication date (day/month/year) | Patent family member(s) | | | Publication date (day/month/year) |
|---|---|---|---|---|---|---|---|
| CN | 111666689 | A | 15 September 2020 | None | | | |
| CN | 106528916 | A | 22 March 2017 | CN | 106528916 | B | 06 August 2019 |
| CN | 110427707 | A | 08 November 2019 | None | | | |
| CN | 108734730 | A | 02 November 2018 | None | | | |
| US | 2015142411 | A1 | 21 May 2015 | RU | 2672668 | C1 | 19 November 2018 |
| | | | | CN | 105917417 | B | 23 March 2018 |
| | | | | EP | 3074982 | A4 | 05 July 2017 |
| | | | | WO | 2015077403 | A1 | 28 May 2015 |
| | | | | US | 10593436 | B2 | 17 March 2020 |
| | | | | CN | 105934798 | B | 27 February 2018 |
| | | | | CN | 105917417 | A | 31 August 2016 |
| | | | | RU | 2016122439 | A | 26 December 2017 |
| | | | | WO | 2015077404 | A1 | 28 May 2015 |
| | | | | CN | 105934798 | A | 07 September 2016 |
| | | | | WO | 2015077406 | A1 | 28 May 2015 |
| | | | | US | 10566100 | B2 | 18 February 2020 |
| | | | | US | 2015142412 | A1 | 21 May 2015 |
| | | | | US | 10325689 | B2 | 18 June 2019 |
| | | | | CN | 105917416 | B | 30 October 2018 |
| | | | | US | 2015142413 | A1 | 21 May 2015 |
| | | | | KR | 20160087886 | A | 22 July 2016 |
| | | | | CN | 105917416 | A | 31 August 2016 |
| | | | | JP | 2017501391 | A | 12 January 2017 |
| | | | | EP | 3074982 | A1 | 05 October 2016 |
| | | | | US | 2015142411 | A1 | 21 May 2015 |

Form PCT/ISA/210 (patent family annex) (January 2015)